# EUROPEAN PATENT SPECIFICATION

(11) **EP 3 345 430 B1**
(45) Date of publication and mention of the grant of the patent: **06.05.2020**
(21) Application number: 15903153.3
(22) Date of filing: 02.09.2015
(51) Int. Cl.: H04W 36/00, H04W 92/20, H04W 36/24

(54) **FIRST AND SECOND RADIO NETWORK NODES AND METHODS PERFORMED THEREIN**
ERSTE UND ZWEITE FUNKNETZWERKKNOTEN UND DARIN DURCHGEFÜHRTE VERFAHREN
PREMIER ET SECOND NOEUD DE RÉSEAU RADIO ET PROCÉDÉS ASSOCIÉS

(43) Date of publication of application: 11.07.2018
(73) Proprietor: Telefonaktiebolaget LM Ericsson (publ), 164 83 Stockholm (SE)
(72) Inventor: BERGSTRÖM, Andreas, 584 31 Linköping (SE); RAMACHANDRA, Pradeepa, 583 32 Linköping (SE); ALRIKSSON, Peter, 242 31 Hörby (SE)
(74) Representative: Ericsson
(86) International application number: PCT/SE2015/050923
(87) International publication number: WO 2017/039503

(56) References cited:
- EP-A1- 2 640 030
- WO-A1-01/78438
- WO-A1-2012/087204
- WO-A1-2013/009248
- WO-A1-2014/196295
- US-A1- 2013 279 478

## Description

### TECHNICAL FIELD

Embodiments herein relate to a first radio network node, a second radio network node, and methods performed therein. In particular, embodiments herein relate to enabling a mobility procedure of a wireless device between the first radio network node and the second radio network node in a wireless communication network.

### BACKGROUND

In a typical wireless communication network, wireless devices, also known as wireless communication devices, mobile stations, stations (STA) and/or user equipments (UEs), communicate via a Radio Access Network (RAN) to one or more core networks. The RAN covers a geographical area which is divided into service areas or cell areas, with each service area or cell area being served by a radio network node such as an access node e.g., a Wi-Fi access point or a radio base station (RBS), which in some networks may also be called, for example, a "NodeB" or "eNodeB". The service area or cell area is a geographical area where radio coverage is provided by the access node. The access node communicates over an air interface operating on radio frequencies with the wireless device within range of the access node.

A Universal Mobile Telecommunications System (UMTS) is a third generation telecommunication network, which evolved from the second generation (2G) Global System for Mobile Communications (GSM). The UMTS terrestrial radio access network (UTRAN) is essentially a RAN using wideband code division multiple access (WCDMA) and/or High Speed Packet Access (HSPA) for user equipments. In a forum known as the Third Generation Partnership Project (3GPP), telecommunications suppliers propose and agree upon standards for third generation networks and UTRAN specifically, and investigate enhanced data rate and radio capacity. In some RANs, e.g. as in UMTS, several access nodes may be connected, e.g., by landlines or microwave, to a controller node, such as a radio network controller (RNC) or a base station controller (BSC), which supervises and coordinates various activities of the plural access nodes connected thereto. This type of connection is sometimes referred to as a backhaul connection. The RNCs are typically connected to one or more core networks.

Specifications for the Evolved Packet System (EPS) have been completed within the 3^{rd} Generation Partnership Project (3GPP) and this work continues in the coming 3GPP releases. The EPS comprises the Evolved Universal Terrestrial Radio Access Network (E-UTRAN), also known as the Long Term Evolution (LTE) radio access network, and the Evolved Packet Core (EPC), also known as System Architecture Evolution (SAE) core network. E-UTRAN/LTE is a variant of a 3GPP radio access technology wherein the access nodes are directly connected to the EPC core network rather than to RNCs. In general, in E-UTRAN/LTE the functions of an RNC are distributed between the access nodes, e.g. eNodeBs in LTE, and the core network. As such, the Radio Access Network (RAN) of an EPS has an essentially "flat" architecture comprising access nodes connected directly to one or more core networks, i.e. they are not connected to RNCs. To compensate for that, the E-UTRAN specification defines a direct interface between the access nodes, this interface being denoted the X2 interface.

Of the upcoming fifth generation of wireless communication networks, 5G, one key design principle currently under consideration is to base the wireless communication network on an ultra-lean design. This implies that "always on signals" from the network should be avoided as much as possible. The expected benefits from this design principle are that the wireless communication network should have a significantly lower network energy consumption, a better scalability, a higher degree of forward compatibility during a radio access technology (RAT) evolution phase, a lower interference from system overhead signals and consequently a higher throughput in low load scenario, and an improved support for user centric beam-forming.

There are principally two sets of mobility procedures considered in both the current LTE standard as well as in the ongoing 5G discussions.

The first set of mobility procedures is denoted 'Idle Mode Mobility' and defines how a wireless device which is deemed 'Idle', i.e. the wireless device has no ongoing nor any recent data transfers, shall be able to reach the wireless communication network using random access procedures and how to be reachable from the wireless communication network by means of paging procedures etc. In idle mode, the mobility procedures, e.g. handovers or cell selections, are typically controlled by the wireless device based on a set of rules, e.g. signal level thresholds and carrier frequency priorities, decided by the wireless communication network.

The other set of mobility procedures is 'Active Mode Mobility', which has a main task of maintaining the connectivity for an 'Active' or 'Connected' wireless device, i.e. the wireless device actually has an ongoing or a recent data transfer, as the wireless device moves around in the wireless communication network, and also to handle abnormal cases such as failed handovers, radio link failures etc. In 'Active Mode Mobility' the mobility procedures are typically controlled by the wireless communication network, potentially based on measurements from the wireless device.

A complete X2-based intra-Mobility Management Entity (MME)/intra Serving Gateway (S-GW) Handover (HO) procedure for an LTE system is given in 3GPP TS 36.300 "E-UTRA(N) Overall Description; Stage 2" version: V12.4.0 (2014-12).

A key difference between the current LTE mobility procedures as per above, and the upcoming 5G mobility procedures, is that in an ultra-lean system as 5G, as described above, the radio network nodes will prevent themselves from keeping some of the 'always-on' signal unlike their counter parts in the LTE system. Instead, the wireless communication network needs to activate the necessary reference signals, also referred to as beams herein, to measure on only when needed.

The term 'beam' used herein is defined in relation with a Reference Signal (RS). That is, from the wireless device's standpoint a beam is considered as an entity that the wireless device may associate with and is recognized via some reference signals specific to that beam which, in the case of a legacy LTE network may be the Cell-specific Reference Signals (CRS) of the cell or wireless device specific reference signals for a specific wireless device. In a wireless communication network with more than one antenna, it is possible for the wireless communication network to form directive antenna radiation patterns, a process which is most often related to as 'beam-forming'. In future wireless communication systems with a large number of antennas, this beam-forming may be very directive and hence provide a very high antenna beamforming gain. In such beam-forming cases, there may be other types of reference signals present, here called simply Beam Reference Signals (BRS) or Mobility Reference Signals (MRS). In all essence however, regardless of the level of directivity of the formed antenna pattern, it is still considered a 'beam'. Hence, for the simplicity of the exposition, the term 'beam' will be used herein.

A service area of a radio network node is a region surrounding the radio network node in which the radio network node is responsible for the active mode mobility related measurements from the wireless device. A wireless device outside such a service area could still be served by the beams from the radio network node but a neighbor radio network node providing radio coverage will be ideally suited for mobility related aspects for the wireless device. Also, such a service area could be a virtual region or could be defined by certain reference signals' coverage. Hence, this 5G concept of service area
may be resembled to the coverage area / cell concept of a current LTE system that has no counterpart in a massively beam-formed system without cell-specific reference symbols being always on.

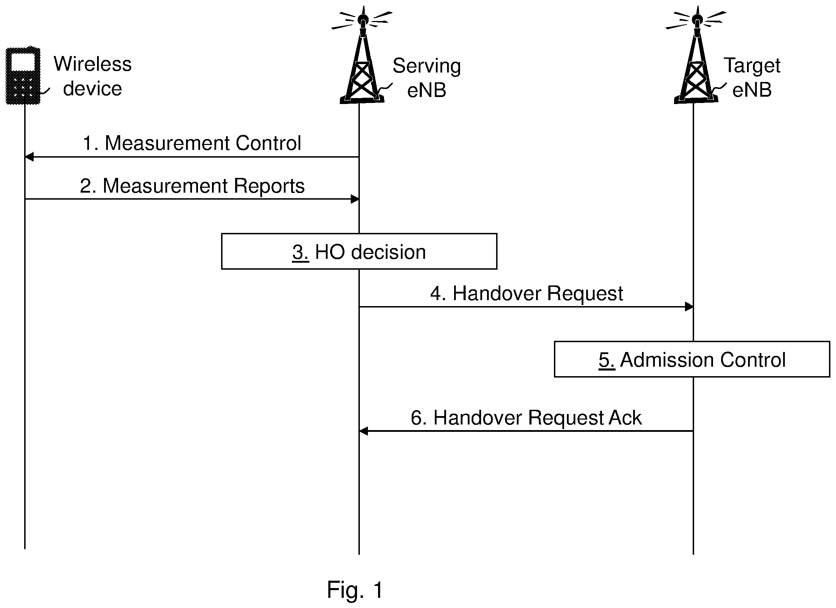

Today, as per 3GPP, the handover procedure is as described in the mobility procedures. More precisely, what could be referred to as an actual HO decision process is shown in **Figure 1****.** Action 1. A serving eNB or radio network node sends the wireless device some measurement control information for enabling measurements and reporting. Action 2. The wireless device reports back to the serving eNB with measurement reports. Action 3. The serving eNB makes a HO decision based on the received measurement reports. In case a HO is decided, the serving eNB transmits a handover request to a target eNB, see Action 4. Action 5. The target eNB performs an admission control and in case the admission control is successful, the target eNB sends a handover request acknowledgement (Ack) to the serving eNB, see Action 6.

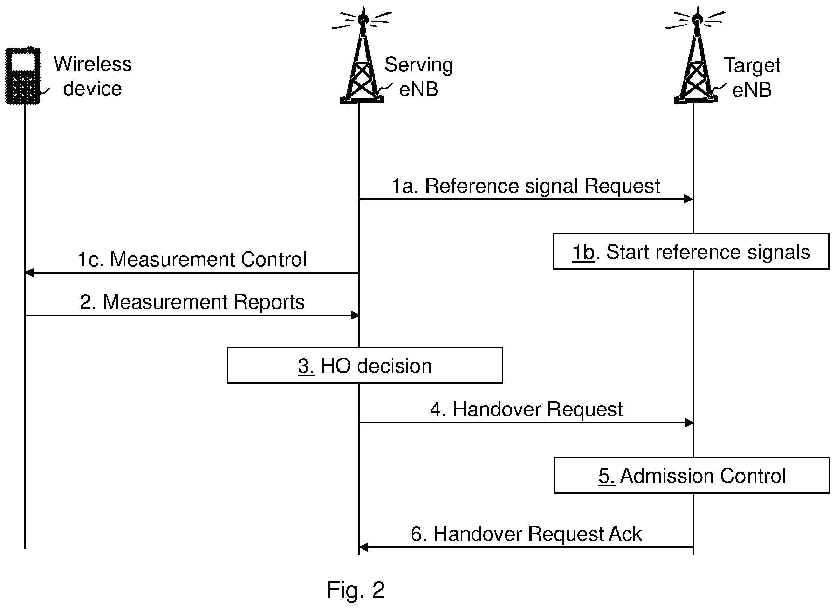

This may be refined further in a scenario where it is not certain that the potential target eNB is transmitting the relevant reference signals corresponding e.g. to a given beam, which is assumed in the legacy case above. In such a case, a request to start transmitting these reference signals is required, which could e.g. as per **Figure 2****,** where the serving eNB at an early stage, based on some logic not shown here, requests the potential target eNB to start the reference signals with a reference signal request as per Action 1a and the target eNB starts the reference signals, see action 1b in the figure 2. Action 1c. The serving eNB sends the wireless device some measurement control information for enabling measurements and reporting. Action 2. The wireless device reports back to the serving eNB with measurement reports. Action 3. The serving eNB makes a HO decision based on the received measurement reports. In case a HO is decided, the serving eNB transmits a handover request to a target eNB, see Action 4. Action 5. The target eNB performs an admission control and in case the admission control is successful, the target eNB sends a handover request Ack to the serving eNB, see Action 6.

In both these scenarios however, the decision making process for the actual HO i.e., Action 3, still lies with the serving eNB and typically a HO will be performed by the serving eNB if the radio conditions are believed to be better for the wireless device if being served by the potential target eNB. However, this is not always the case and previous solution limits the performance of the wireless communication network relying on the action performed at the source radio network node.

US 2013/0279478 is related to a method for delegating serving functions, associated with a mobile terminal, from one node to another node while keeping the overall responsibility for managing of the mobile terminal in the node.

### SUMMARY

An object of embodiments herein is to provide a mechanism that improves performance of the wireless communication network.

According to an aspect the object is achieved by a method performed by a first radio network node for enabling a mobility procedure of a wireless device between the first radio network node and a second radio network node in a wireless communication network. The first radio network node determines to delegate a handover decision for the wireless device to the second radio network node. The first radio network node transmits an indication to the second radio network node, which indication indicates a delegation of the handover decision for the wireless device thereby enabling the mobility procedure of the wireless device.

According to another aspect the object is achieved by a method performed by a second radio network node for performing a mobility procedure of a wireless device between a first radio network node and the second radio network node in a wireless communication network. The second radio network node receives from the first radio network node an indication, which indication indicates a delegation of a handover decision for the wireless device. The second radio network node performs the handover decision of the wireless device.

According to yet another aspect the object is achieved by providing a first radio network node for enabling a mobility procedure of a wireless device between the first radio network node and a second radio network node in a wireless communication network. The first radio network node is configured to determine to delegate a handover decision for the wireless device to the second radio network node. In addition, the first radio network node transmits an indication to the second radio network node, which indication indicates a delegation of the handover decision for the wireless device thereby enabling the mobility procedure of the wireless device.

According to yet another aspect the object is achieved by providing a second radio network node for performing a mobility procedure of a wireless device between a first radio network node and the second radio network node in a wireless communication network. The second radio network node is configured to receive from the first radio network node an indication, which indication indicates a delegation of a handover decision for the wireless device. Furthermore, the second radio network node is configured to perform the handover decision of the wireless device

Methods for the first radio network node to delegate the HO decision to the second radio network node are herein provided. The second radio network node has better knowledge of e.g. load and interference conditions within its service area, thus it is preferable to delegate the HO decision when e.g. the wireless device is within the second radio network node's service area. This creates a possibility of retaining the serving capability for the first radio network node towards the wireless device inside the service area of the second radio network node. Hence some handovers may be avoided that are not necessary and this results in an improved performance of the wireless communication network.

### BRIEF DESCRIPTION OF THE DRAWINGS

Embodiments will now be described in more detail in relation to the enclosed drawings, in which:
- Fig. 1: is a combined signalling scheme and flowchart depicting a method according to prior art;
- Fig. 2: is a combined signalling scheme and flowchart depicting a method according to prior art;
- Fig. 3: is a schematic overview depicting a wireless communication network according to embodiments herein;
- Fig. 4: is a combined signalling scheme and flowchart depicting a method according to embodiments herein;
- Fig. 5: is a schematic overview depicting a method according to some embodiments herein;
- Fig. 6: is a schematic overview depicting a method according to some embodiments herein;
- Fig. 7: is a flowchart depicting a method according to embodiments herein;
- Fig. 8: is a flowchart depicting a method according to embodiments herein;
- Fig. 9: is a block diagram depicting a first radio network node according to embodiments herein; and
- Fig. 10: is a block diagram depicting a second radio network node according to embodiments herein.

### DETAILED DESCRIPTION

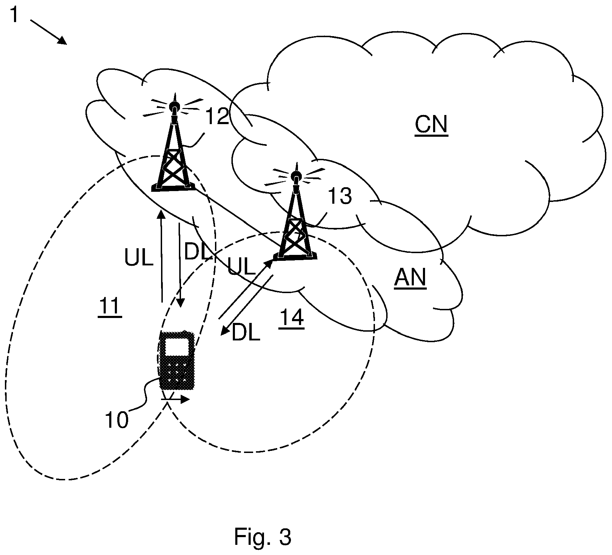

Embodiments herein relate to wireless communication networks in general. **Figure 3** is a schematic overview depicting **a wireless communication network 1.** The wireless communication network 1 comprises one or more RANs and one or more CNs. The wireless communication network 1 may use a number of different technologies, such as Wi-Fi, Long Term Evolution (LTE), LTE-Advanced, 5G, Wideband Code Division Multiple Access (WCDMA), Global System for Mobile communications/enhanced Data rate for GSM Evolution (GSM/EDGE), Worldwide Interoperability for Microwave Access (WiMax), or Ultra Mobile Broadband (UMB), just to mention a few possible implementations. Embodiments herein relate to recent technology trends that are of particular interest in a 5G context, however, embodiments are applicable also in further development of the existing wireless communication systems such as e.g. WCDMA and LTE.

In the wireless communication network 1, wireless devices e.g. **a wireless device 10** such as a mobile station, a non-access point (non-AP) STA, a STA, a user equipment and/or a wireless terminals, communicate via one or more Access Networks (AN), e.g. RAN, to one or more core networks (CN). It should be understood by those skilled in the art that "wireless device" is a non-limiting term which means any terminal, wireless communication terminal, user equipment, Machine Type Communication (MTC) device, Device to Device (D2D) terminal, or node e.g. smart phone, laptop, mobile phone, sensor, relay, mobile tablets or even a base station communicating within a cell.

The wireless communication network 1 comprises **a first radio network node 12** providing radio coverage over a geographical area, **a first service area 11,** of a first radio access technology (RAT), such as LTE, Wi-Fi or similar. The first radio network node 12 may be a radio network node such as an access point such as a Wireless Local Area Network (WLAN) access point or an Access Point Station (AP STA), an access controller, a base station, e.g. a radio base station such as a NodeB, an evolved Node B (eNB, eNode B), a base transceiver station, Access Point Base Station, base station router, a transmission arrangement of a radio base station, a stand-alone access point or any other network unit capable of communicating with a wireless device within the area served by the first radio network node 12 depending e.g. on the first radio access technology and terminology used. The first radio network node 12 may be referred to as a source radio network node.

Furthermore, the wireless communication network 1 comprises **a second radio network node 13** providing radio coverage over a geographical area, **a second service area 14,** of a second radio access technology, such as LTE, Wi-Fi, WiMAX or similar. The second radio network node 13 may be a radio network node such as an access point such as a WLAN access point or an Access Point Station (AP STA), an access controller, a base station, e.g. a radio base station such as a NodeB, an evolved Node B (eNB, eNode B), a base transceiver station, Access Point Base Station, base station router, a transmission arrangement of a radio base station, a stand-alone access point or any other network unit capable of communicating with a wireless device within the area served by the second radio network node 13 depending e.g. on the second radio access technology and terminology used. The first and second RAT may be the same or different RATs. The second radio network node 13 may be referred to as a target radio network node.

According to embodiments herein the first radio network node 12 delegates a Handover decision of the wireless device 10 to the second radio network node 13, thus letting the second radio network node 13 with knowledge of the second service area 14 make the handover decision. For example, the wireless device 10 moves through the wireless communication network 1 and is measuring signal strength that may indicate a HO from the first radio network node 12 to the second radio network node 13. It may however, in some situations, be so that the first radio network node 12 is more capable and/or is lesser loaded than the second network node 13, being the potential target radio network node. If now that first radio network node 12 can form a really good beam into the area served by the second radio network node 13 then, instead of straining the second radio network node 13 with an additional served wireless device, the first radio network node 12 may "help out" by keep serving the wireless device 10 - at least during a limited period. It might also be so that the wireless device 10 shortly after returns to the first service area 11 of the first radio network node 12 and thus no HO to the second radio network node 13 is necessary.

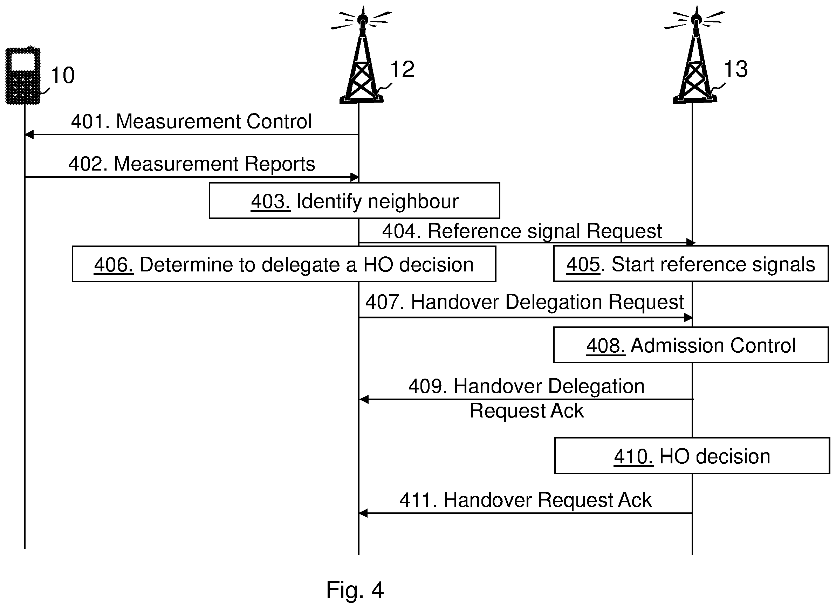

Instead of triggering a handover upon e.g. the wireless device 10 passing outside the first service area 11 of the first radio network node 12, as e.g. determined by its service area border, according to embodiments herein, the first radio network node 12 may still continue serving the wireless device 10 outside this first service area 11 based on a decision taken in the second radio network node 13. This implies that the wireless device 10 will then be geographically located within the second service area border of the second radio network node 13, whilst still being served by another node, the first radio network node 12. In doing so, the first radio network node 12 may inform the second radio network node 13 about this and also delegates the HO decision authority to the second radio network node 13 as depicted in Figure 4 below. Thus, during some period or time interval, mobility procedures may be running in both radio network nodes simultaneously. In a single-connectivity case, there will thus be one serving beam in the first radio network node 12 serving the wireless device 10 and another "potential serving" beam in the second radio network node 13 being a potential target radio network node. In the multi-connectivity case, there may hence be multiple serving and/or potentially serving beams in one or more serving radio network nodes and/or potential target radio network nodes.

Hence, one reason to provide service coverage outside of the first service area 11 until the second radio network node 13 decides to perform a handover could be that the second radio network node 13 is loaded above a threshold. Another reason is that in case the wireless device 10 comes back into the first service area 11 of the first radio network node 12 it is better if the first radio network node 12 keeps serving the wireless device 10 as one should avoid HO if possible due to the risk of losing the connection during the HO.

**Figure 4** is a combined flowchart and signaling scheme according to embodiments herein. The actions do not have to be taken in the order stated below, but may be taken in any suitable order.
**Action 401.** The first radio network node 12 transmits some measurement control information to the wireless device 10 enabling the wireless device 1 to perform measurements and reporting, such as reference signals to measure on etc.
**Action 402.** The wireless device 10 measures and reports back to the first radio network node 12 with measurement reports.
**Action 403.** The first radio network node 12 may identify neighbor radio network nodes to be relevant for the wireless device, e.g. may identify the second radio network node 13 as being relevant for the wireless device 10.
**Action 404.** The first radio network node 12 may request the second radio network node 13 to activate a set of one or more beams towards the wireless device 10. The first radio network node 12 may transmit a reference signal request to start transmitting reference signals or beams, based on some logic not shown here, requesting the second radio network node 13 to start transmitting the reference signals and then the second radio network node 13 starts the reference signals, **action 405.**
**Action 406.** The first radio network node 12 determines to delegate a handover decision for the wireless device 10 to the second radio network node 13, e.g. when the wireless device 10 is determined to be moving into the second service area 14 of the second radio network node 13. The position of the wireless device 10 may be determined at the first radio network node 12, reported from the wireless device or similar.
**Action 407.** The first radio network node 12 transmits an indication, e.g. a handover delegation request, to the second radio network node 13, which indication indicates a delegation of the handover decision for the wireless device 10 thereby enabling the mobility procedure of the wireless device 10. This may be a request of an X2 protocol. Information may be e.g. exchanged over backhaul links directly between the radio network nodes, e.g. via X2 or similar, or relayed via the CN, e.g. via S1 or similar, e.g. using a layer protocol as Radio Resource Control (RRC) protocol.
**Action 408.** The second radio network node 13 may then perform an admission control, e.g. check that the second radio network node 13 is capable or has capacity to handle a handover decision process.
**Action 409.** In case the admission control is successful, the second radio network node 13 may transmit a Handover Delegation Request Ack confirming the HO delegation.
**Action 410.** The second radio network node 13 performs a handover decision based on measurements from the wireless device 10. Furthermore, the second radio network node 13 may consider load in the second radio network node 13 as well as in the first radio network node 12 when determining whether to handover or not. The second radio network node 13 may keep the wireless device 10 in the first radio network node 12 when the load the signal of a beam from the first radio network node 12 is still reported from the wireless device 10 with a signal strength/quality above a threshold and the load in the second radio network node 13 is above a load threshold.
**Action 411.** The second radio network node 13 may transmit a handover request Ack upon determining to perform the handover.

As stated above, it may be so that the first radio network node 12 is more capable and/or is lesser loaded than the potential second radio network node 13 and may form a really good beam into the area served by the second radio network node 13. The first radio network node 12 may then serve the wireless device 10 for an additional period of time. This could also reduce the potential risk of too-early and ping-pong handovers where the wireless device is handed over back and forth between the radio network nodes. For a multi-connectivity capable wireless device, this allows to establish/break the connections/legs one-by-one, and hence providing a more seamless handover in a soft-handover-similar manner.

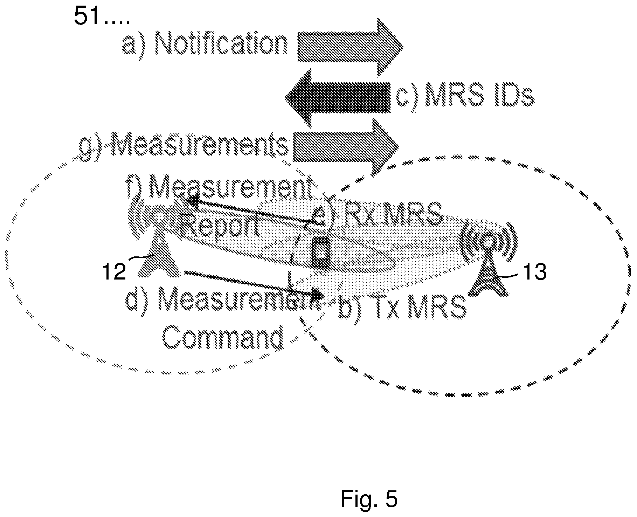

The wireless device 10 may pass inside a service area of a neighboring node, e.g. the second service area 14 of the second radio network node 13. This will, in some embodiments, trigger a DL mobility procedure as depicted in **Figure 5****.** This may include the following actions:

### Action 51...

**a)** The first radio network node 12 notifies the second radio network node 13 about delegation of the handover decision e.g. with a notification.
**b)** The second radio network node 13 activates the relevant beams, e.g. transmits (Tx) MRSs,
**c)** and thereafter the second radio network node 13 informs the first radio network node 12 on which beams has been activated, e.g. transmits MRS IDs.
**d)** The wireless device 10 is commanded by the first radio network node 12 to measure on these beams with e.g. a measurement command.
**e)** The wireless device 10 measures on the beams, e.g. receives (Rx) MRSs, and....
**f)** the wireless device 10 reports the measurement results in a measurement report to the first radio network node 12,
**g)** which measurement/s the first radio network node 12 forwards to the second radio network node 13 for the second radio network node 13 to take into account when determining handover or not.

Also note that, in some situations, the first radio network node 12 has prior knowledge on which beams would be suitable for activation in the second radio network node 13. The notification of action a) may contain information of which beams are to be activated in the second radio network node 13 in analogy with Fig. 4. Hence, the action c) may be omitted in such cases. In some other situations, each radio network node keeps the full (or partial) information on which beams that are suitable for activation and hence the specific beam information in action a) may not be included. In these cases, action c) is needed.

The second radio network node 13 now will know the best potentially serving beams it could provide to the wireless device 10. The second radio network node may then trigger a HO, i.e. move the wireless device 10 to the second radio network node 13, or choose not to do so, i.e. keep the wireless device 10 connected to the first radio network node 12. According to embodiments herein, the wireless device 10 may maintain, from a network point of view, a serving beam from the first radio network node 12 and in addition a potential serving beam from the second radio network node 13. It should be noted that e.g. in a multi-connectivity case where the wireless device 10 is connected to both the first radio network node 12 and the second radio network node 13, the decision may be taken already at this stage to activate the potential serving beam from the second radio network node 13 as being another serving beam in the serving beam set.

The wireless device 10 may pass outside the first service area 11 of the first radio network node 12. In a single connectivity case, the second radio network node 13 is informed about this which potentially, but not necessarily, causes the second radio network node 13 to trigger the HO Request ACK of Fig. 4 earlier, i.e. the second radio network node 13 now starts serving the wireless device 10. The second radio network node 13 may thus decide to trigger a HO. The second radio network node 13 transmits e.g. a HO trigger to the first radio network node 12 and the first radio network node 12 sends a HO command to the wireless device 10, which wireless device 10 finally now ends up being served by the second radio network node 13.

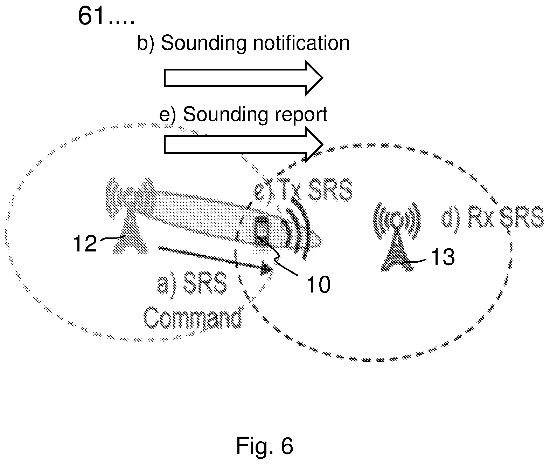

For the UL mobility case, the overall procedure will be similar to that described for the DL above. The key difference would be in relation to Figure 5 which instead would be replaced with the actions as indicated in **Figure 6****,** namely:

### Action 61:

**a)** The serving first radio network node 12 issues a sounding command to the wireless device 10, e.g. transmits a Sounding Reference Signal (SRS) command, and
**b)** notifies the second radio network node 13 on this, e.g. which resources are used for the sounding in a sounding notification.
**c)** The wireless device 10 performs the sounding, i.e. Tx SRS.
**d)** The second radio network node 13 listens/measures the sounding, i.e. Rx SRS.
**e)** The first radio network node 12 listens/measures the sounding from the wireless device 10 and reports it to the second radio network node 13 in a sounding report for the second radio network node 13 to take into account when determining handover or not.

In some embodiments, the procedure is started once the wireless device 10 passes outside the first service area 11 of the first radio network node 12. In some other embodiments, the procedure is started when the wireless device 10 passes inside the second service area 14 of the second radio network node 13.

In some embodiments, the procedure is stopped once the wireless device 10 passes outside the first service area 11 of the first radio network node 12. In some other embodiments, the procedure is stopped when the decision to perform a handover is taken. In yet some other embodiments, the procedure is allowed only during a limited period of time as previously configured. In further yet some other embodiments, the procedure is allowed only until the radio conditions have deviated by a certain amount from their initial values.

According to embodiments herein, the decision to perform the handover is taken by the second radio network node 13. This implies that the two involved radio network nodes, i.e. the first radio network node 12 and the second radio network node 13, have gone through such a delegation procedure where a delegation of this responsibility has taken place.

In some embodiments, the first radio network node 12 may ask the second radio network node 13 to activate an explicit set of one or more beams, which can then be used for measurements by the wireless device 10 connected to first radio network node 12. In some other embodiments, the first radio network node 12 asks the second radio network node 13 to activate "some" beams without explicitly indicating which, where after second radio network node 13 will inform the first radio network node 12 on exactly which beams was activated.

In some embodiments, the first radio network node 12 may ask or inform the second radio network node 13 to listen in to and measure a given SRS.

In some embodiments, measurements, DL and/or UL as described above, are forwarded between the involved radio network nodes.

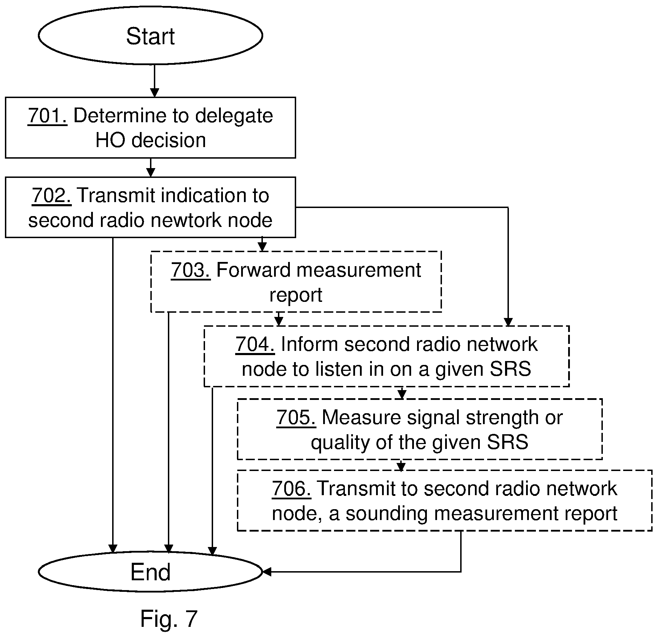

The method actions performed by the first radio network node 12 for enabling a mobility procedure of the wireless device 10 between the first radio network node 12 and the second radio network node 13 in the wireless communication network 1 according to some embodiments will now be described with reference to a flowchart depicted in Fig. 7. The actions do not have to be taken in the order stated below, but may be taken in any suitable order. Actions performed in some embodiments are marked with dashed boxes.
**Action 701.** The first radio network node 12 determines to delegate a handover decision for the wireless device 10 to the second radio network node 13. E.g. one trigger may be that the wireless device 10 is passing outside the first service area 11 of the first radio network node 12 while being inside of the second service area 14 of the second radio network node 13.
**Action 702.** The first radio network node 12 transmits an indication to the second radio network node 13, which indication indicates a delegation of the handover decision for the wireless device 10 thereby enabling the mobility procedure of the wireless device 10.
**Action 703.** The first radio network node 12 may forward to the second radio network node 13, a measurement report from the wireless device 10 indicating a signal strength or quality of a signal from the first radio network node 12 at the wireless device 10 and/or a signal strength or quality of a signal from the second radio network node 13 at the wireless device 10.
**Action 704.** The first radio network node 12 may inform the second radio network node 13 to listen in on a given sounding reference signal from the wireless device 10. Furthermore, the first radio network node 12 may request the second radio network node 13 to report back a measurement of the given sounding reference signal from the wireless device 10. The first radio network node 12 may inform the second radio network node 13 in a message which message may further comprise a request to report back. The measurement reported back may be used to gather information of the second network node 13 for future use.
**Action 705.** The first radio network node 12 may measure a signal strength or quality of the given sounding reference signal from the wireless device 10.
**Action 706.** The first radio network node 12 may then transmit, e.g. forward, to the second radio network node 13, a sounding measurement report indicating the measured signal strength or quality of the given sounding reference signal from the wireless device 10. Actions 704-706 relate to UL transmissions and Action 703 relates to DL transmissions.

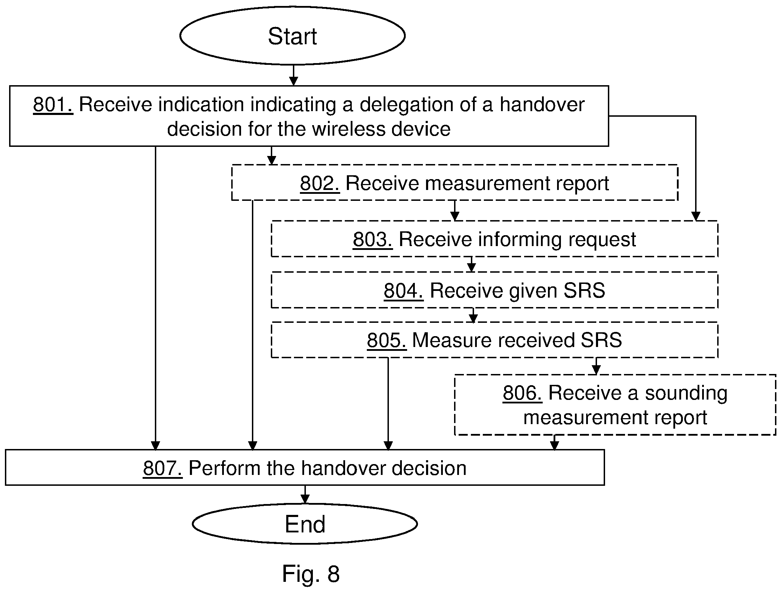

The method actions performed by the second radio network node 13 for performing a mobility procedure of the wireless device 10 between the first radio network node 12 and the second radio network node 13 in the wireless communication network 1 according to some embodiments will now be described with reference to a flowchart depicted in **Fig. 8****.** The actions do not have to be taken in the order stated below, but may be taken in any suitable order. Actions performed in some embodiments are marked with dashed boxes.
**Action 801.** The second radio network node 13 receives from the first radio network node 12 the indication, which indication indicates a delegation of a handover decision for the wireless device 10.
**Action 802.** The second radio network node 13 may receive from the first radio network node 12, the measurement report from the wireless device 10 indicating the signal strength or quality of a signal from the first radio network node 12 at the wireless device 10 and/or the signal strength or quality of a signal from the second radio network node 13 at the wireless device 10. The signal strength or quality of the signal from the second radio network node 13 at the wireless device 10 may be reported directly from the wireless device 10.
**Action 803.** The second radio network node 13 may receive an informing request from the first radio network node 12 informing the second radio network node 13 to listen in on a given sounding reference signal from the wireless device 10. The informing request may further request the second radio network node 13 to report back a measurement of the given sounding reference signal from the wireless device 10. Such information may be used by the first radio network node 12 to build up knowledge of the second service area 14 of the second radio network node 13.
**Action 804.** The second radio network node 13 may receive the given sounding reference signal from the wireless device 10,
**Action 805.** The second radio network node 13 may measure the signal strength and/or quality from the wireless device 10 on the received sounding reference signal.
**Action 806.** The second radio network node 13 may receive from the first radio network node 12, a sounding measurement report indicating the measured signal strength or quality of the given sounding reference signal from the wireless device 10.
**Action 807.** The second radio network node 13 performs the handover decision of the wireless device 10. The second radio network node 13 may perform the handover decision, based on the received measurement report see action 802 above. The second radio network node 13 may perform the handover decision based on the received sounding measurement, see action 806, and the measured signal strength and/or quality of the received sounding reference signal, see action 805. Additionally and/or alternatively, the second radio network node 13 may perform the handover decision based on a load in the first radio network node 12 and/or the second radio network node 13.

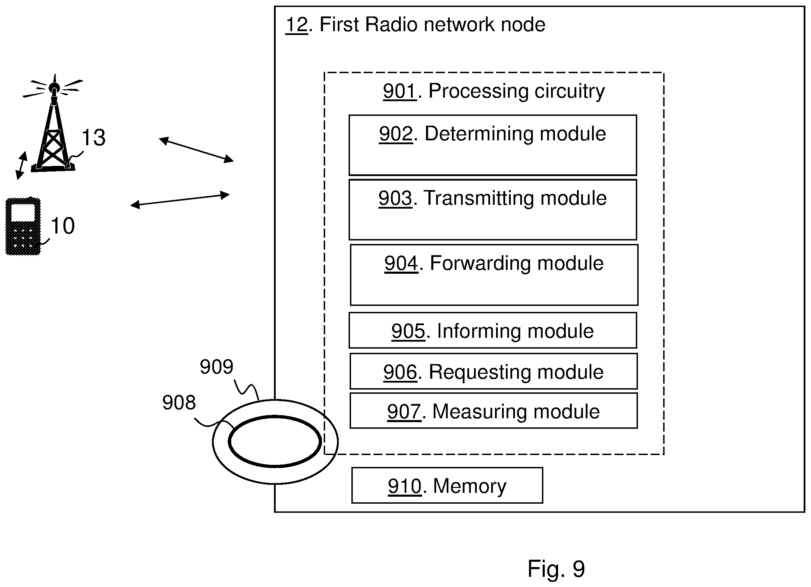

In order to perform the method the first radio network node 12 is provided herein. **Figure 9** is a block diagram depicting the first radio network node 12 for enabling a mobility procedure of the wireless device 10 between the first radio network node 12 and the second radio network node 13 in the wireless communication network 1.

The first radio network node 12 may comprise **processing circuitry 901** configured to perform the methods herein.

The first radio network node 12 is configured to determine to delegate a handover decision for the wireless device 10 to the second radio network node. The first radio network node 12 may comprise **a determining module 902.** The processing circuitry 901 and/or the determining module 902 may be configured to determine to delegate a handover decision for the wireless device 10 to the second radio network node.

The first radio network node 12 is further configured to transmit the indication to the second radio network node 13, which indication indicates a delegation of the handover decision for the wireless device 10 thereby enabling the mobility procedure of the wireless device 10. The first radio network node 12 may comprise **a transmitting module 903.** The processing circuitry 901 and/or the transmitting module 903 may be configured to transmit the indication to the second radio network node 13, which indication indicates the delegation of the handover decision for the wireless device 10 thereby enabling the mobility procedure of the wireless device 10.

The first radio network node 12 may further be configured to forward to the second radio network node 13, a measurement report from the wireless device 10 indicating a signal strength or quality of a signal from the first radio network node 12 at the wireless device 10 and/or a signal strength or quality of a signal from the second radio network node 13 at the wireless device 10. The first radio network node 12 may comprise **a forwarding module 904.** The processing circuitry 901 and/or the forwarding module 904 may be configured to forward to the second radio network node 13, a measurement report from the wireless device 10 indicating a signal strength or quality of a signal from the first radio network node 12 at the wireless device 10 and/or a signal strength or quality of a signal from the second radio network node 13 at the wireless device 10.

The first radio network node 12 may further be configured to inform the second radio network node 13 to listen in on a given sounding reference signal from the wireless device 10. The first radio network node 12 may comprise **an informing module 905.** The processing circuitry 901 and/or the informing module 905 may be configured to inform the second radio network node 13 to listen in on a given sounding reference signal from the wireless device 10.

The first radio network node 12 may further be configured to request the second radio network node 13 to report back a measurement of the given sounding reference signal from the wireless device 10. The first radio network node 12 may comprise **a requesting module 906.** The processing circuitry 901 and/or the requesting module 906 may be configured to request the second radio network node 13 to report back a measurement of the given sounding reference signal from the wireless device 10.

The first radio network node 12 may additionally be configured to measure a signal strength or quality of the given sounding reference signal from the wireless device 10. The first radio network node 12 may comprise **a measuring module 907.** The processing circuitry 901 and/or the measuring module 907 may be configured to measure a signal strength or quality of the given sounding reference signal from the wireless device 10.

The first radio network node 12 may then be configured to transmit to the second radio network node 13, a sounding measurement report indicating the measured signal strength or quality of the given sounding reference signal from the wireless device 10. The processing circuitry 901 and/or the transmitting module 903 may be configured to transmit to the second radio network node 13, the sounding measurement report indicating the measured signal strength or quality of the given sounding reference signal from the wireless device 10.

The methods according to the embodiments described herein for the first radio network node 12 are respectively implemented by means of e.g. **a computer program 908** or a computer program product, comprising instructions, i.e., software code portions, which, when executed on at least one processor, cause the at least one processor to carry out the actions described herein, as performed by the first radio network node 12. The computer program 908 may be stored on **a computer-readable storage medium 909,** e.g. a disc or similar. The computer-readable storage medium 909, having stored thereon the computer program, may comprise the instructions which, when executed on at least one processor, cause the at least one processor to carry out the actions described herein, as performed by the first radio network node 12. In some embodiments, the computer-readable storage medium may be a non-transitory computer-readable storage medium.

The first radio network node 12 further comprises **a memory 910.** The memory comprises one or more units to be used to store data on, such as signal strengths, measurements, measurement reports, beams, load, reference signals, applications to perform the methods disclosed herein when being executed, and similar.

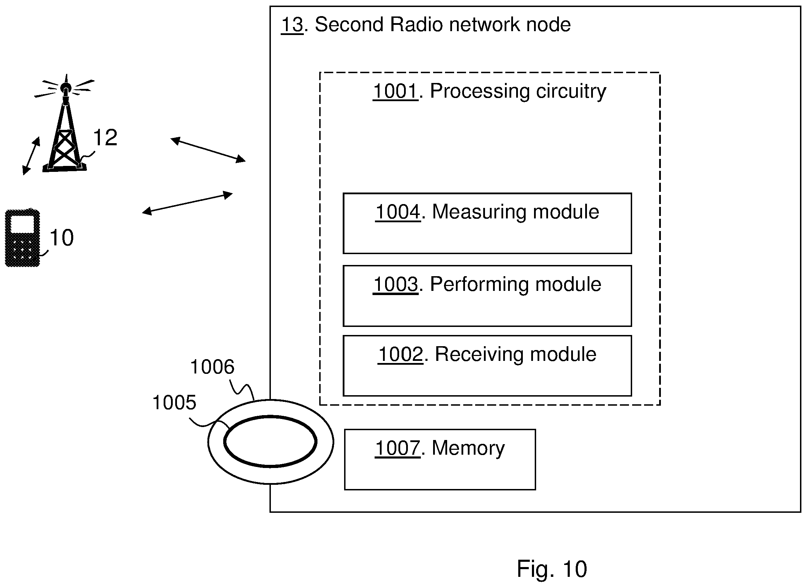

In order to perform the method the second radio network node 13 is provided herein. **Figure 10** is a block diagram depicting the second radio network node 13 for performing a mobility procedure of the wireless device 10 between the first radio network node 12 and the second radio network node 13 in the wireless communication network 1. The second radio network node 13 may comprise **processing circuitry 1001** configured to perform the methods herein.

The second radio network node 13 is configured to receive from the first radio network node 12 the indication, which indication indicates a delegation of a handover decision for the wireless device 10. The second radio network node 13 may comprise a **receiving module 1002.** The processing circuitry 1001 and/or the receiving module 1002 may be configured to receive from the first radio network node 12 the indication, which indication indicates a delegation of a handover decision for the wireless device 10.

The second radio network node 13 is further configured to perform the handover decision of the wireless device 10. The second radio network node 13 may be configured to perform the handover decision based on a load in the first radio network node 12 and/or the second radio network node 13. The second radio network node 13 may comprise **a performing module 1003.** The processing circuitry 1001 and/or the performing module 1003 may be configured to perform the handover decision of the wireless device 10.. The processing circuitry 1001 and/or the performing module 1003 may be configured to perform the handover decision based on a load in the first radio network node 12 and/or the second radio network node 13.

The second radio network node 13 may further be configured to receive from the first radio network node 12, the measurement report from the wireless device 10 indicating a signal strength or quality of a signal from the first radio network node 12 at the wireless device 10 and/or a signal strength or quality of a signal from the second radio network node 13 at the wireless device 10. The processing circuitry 1001 and/or the receiving module 1002 may be configured to receive from the first radio network node 12, the measurement report from the wireless device 10 indicating a signal strength or quality of a signal from the first radio network node 12 at the wireless device 10 and/or a signal strength or quality of a signal from the second radio network node 13 at the wireless device 10.

The second radio network node 13 may then be configured to perform the handover decision based on the received measurement report. The processing circuitry 1001 and/or the performing module 1003 may be configured to perform the handover decision, additionally or alternatively, based on the received measurement report.

The second radio network node 13 may further be configured to receive the informing request from the first radio network node informing the second radio network node 13 to listen in on a given sounding reference signal from the wireless device 10. The informing request may further request the second radio network node 13 to report back a measurement of the given sounding reference signal from the wireless device 10. The processing circuitry 1001 and/or the receiving module 1002 may be configured to receive the informing request from the first radio network node informing the second radio network node 13 to listen in on a given sounding reference signal from the wireless device 10.

The second radio network node 13 may then be configured to receive the given sounding reference signal from the wireless device 10. The processing circuitry 1001 and/or the receiving module 1002 may be configured to receive the given sounding reference signal from the wireless device 10.

The second radio network node 13 may then be configured to measure signal strength and/or quality from the wireless device 10 on the received sounding reference signal. The second radio network node 13 may comprise **a measuring module 1004.** The processing circuitry 1001 and/or the measuring module 1004 may be configured to measure signal strength and/or quality from the wireless device 10 on the received sounding reference signal.

The second radio network node 13 may be configured to receive from the first radio network node 12, the sounding measurement report indicating the measured signal strength or quality of the given sounding reference signal from the wireless device 10. The processing circuitry 1001 and/or the receiving module 1002 may be configured to receive from the first radio network node 12, the sounding measurement report indicating the measured signal strength or quality of the given sounding reference signal from the wireless device 10.

Then, the second radio network node 13 may further be configured to perform the handover decision based on the received sounding measurement and the measured signal strength and/or quality of the received sounding reference signal. The processing circuitry 1001 and/or the performing module 1003 may be configured to perform the handover decision based on the received sounding measurement and the measured signal strength and/or quality of the received sounding reference signal.

The methods according to the embodiments described herein for the second radio network node 13 are respectively implemented by means of e.g. **a computer program 1005** or a computer program product, comprising instructions, i.e., software code portions, which, when executed on at least one processor, cause the at least one processor to carry out the actions described herein, as performed by the second radio network node 13. The computer program 1005 may be stored on **a computer-readable storage medium 1006,** e.g. a disc or similar. The computer-readable storage medium 1006, having stored thereon the computer program, may comprise the instructions which, when executed on at least one processor, cause the at least one processor to carry out the actions described herein, as performed by the second radio network node 13. In some embodiments, the computer-readable storage medium may be a non-transitory computer-readable storage medium.

The second radio network node 13 further comprises **a memory 1007.** The memory comprises one or more units to be used to store data on, such as signal strengths, measurements, measurement reports, beams, load, reference signals, applications to perform the methods disclosed herein when being executed, and similar.

As will be readily understood by those familiar with communications design, that functions means or modules may be implemented using digital logic and/or one or more microcontrollers, microprocessors, or other digital hardware. In some embodiments, several or all of the various functions may be implemented together, such as in a single application-specific integrated circuit (ASIC), or in two or more separate devices with appropriate hardware and/or software interfaces between them. Several of the functions may be implemented on a processor shared with other functional components of a radio network node, for example.

Alternatively, several of the functional elements of the processing means discussed may be provided through the use of dedicated hardware, while others are provided with hardware for executing software, in association with the appropriate software or firmware. Thus, the term "processor" or "controller" as used herein does not exclusively refer to hardware capable of executing software and may implicitly include, without limitation, digital signal processor (DSP) hardware, read-only memory (ROM) for storing software, random-access memory for storing software and/or program or application data, and non-volatile memory. Other hardware, conventional and/or custom, may also be included. Designers of communications receivers will appreciate the cost, performance, and maintenance trade-offs inherent in these design choices.

It will be appreciated that the foregoing description and the accompanying drawings represent non-limiting examples of the methods and apparatus taught herein. As such, the inventive apparatus and techniques taught herein are not limited by the foregoing description and accompanying drawings. Instead, the embodiments herein are limited only by the following claims.

## Claims

1. A method performed by a first radio network node (12) for enabling a mobility procedure of a wireless device (10) between the first radio network node (12) and a second radio network node (13) in a wireless communication network (1); comprising:
- *determining* (701) to delegate a handover decision for the wireless device (10) to the second radio network node (13), and
- *transmitting* (702) an indication to the second radio network node (13), which indication indicates a delegation of the handover decision for the wireless device (10).

2. A method according to claim 1, further comprising
- *forwarding* (703) to the second radio network node (13), a measurement report from the wireless device (10) indicating a signal strength or quality of a signal from the first radio network node (12) at the wireless device (10) and/or a signal strength or quality of a signal from the second radio network node (13) at the wireless device (10).

3. A method according to any of the claims 1-2, further comprising
- *informing* (704) the second radio network node (13) to listen in on a given sounding reference signal from the wireless device (10).

4. A method according to claim 3, wherein the *informing* (704) further comprises requesting the second radio network node (13) to report back a measurement of the given sounding reference signal from the wireless device (10).

5. A method according to any of the claims 3-4, further comprising
- *measuring* (705) a signal strength or quality of the given sounding reference signal from the wireless device (10);
- *transmitting* (706) to the second radio network node (13), a sounding measurement report indicating the measured signal strength or quality of the given sounding reference signal from the wireless device (10).

6. A method performed by a second radio network node (13) for performing a mobility procedure of a wireless device (10) between a first radio network node (12) and the second radio network node (13) in a wireless communication network (1); comprising
- *receiving* (801) from the first radio network node (12) an indication, which indication indicates a delegation of a handover decision for the wireless device (10), and
- *performing* (807) the handover decision of the wireless device (10) .

7. A method according to claim 6, further comprising
- *receiving* (802) from the first radio network node (12), a measurement report from the wireless device (10) indicating a signal strength or quality of a signal from the first radio network node (12) at the wireless device (10) and/or a signal strength or quality of a signal from the second radio network node (13) at the wireless device (10) and the *performing* (807) the handover decision is based on the received measurement report.

8. A method according to any of the claims 6-7, further comprising
- *receiving* (803) an informing request from the first radio network node informing the second radio network node (13) to listen in on a given sounding reference signal from the wireless device (10);
- *receiving* (804) the given sounding reference signal from the wireless device (10); and
- *measuring* (805) signal strength and/or quality from the wireless device (10) on the received sounding reference signal.

9. A method according to claim 8, further comprising
- *receiving* (806) from the first radio network node (12), a sounding measurement report indicating the measured signal strength or quality of the given sounding reference signal from the wireless device (10); and the performing (807) the handover decision is based on the received sounding measurement and the measured signal strength and/or quality of the received sounding reference signal.

10. A method according to any of the claims 6-9, wherein the *performing* (807) is based on a load in the first radio network node and/or a load in the second radio network node.

11. A first radio network node (12) for enabling a mobility procedure of a wireless device (10) between the first radio network node (12) and a second radio network node (13) in a wireless communication network (1); the first radio network node (12) being configured to:
determine to delegate a handover decision for the wireless device (10) to the second radio network node (13), and
transmit an indication to the second radio network node (13), which indication indicates a delegation of the handover decision for the wireless device (10).

12. A first radio network node (12) according to claim 11, further being configured to
forward to the second radio network node (13), a measurement report from the wireless device (10) indicating a signal strength or quality of a signal from the first radio network node (12) at the wireless device (10) and/or a signal strength or quality of a signal from the second radio network node (13) at the wireless device (10).

13. A second radio network node (13) for performing a mobility procedure of a wireless device (10) between a first radio network node (12) and the second radio network node (13) in a wireless communication network (1); the second radio network node (13) being configured to
receive from the first radio network node (12) an indication, which indication indicates a delegation of a handover decision for the wireless device (10), and
perform the handover decision of the wireless device (10).

14. A second radio network node (13) according to claim 13, further being configured to
receive from the first radio network node (12), a measurement report from the wireless device (10) indicating a signal strength or quality of a signal from the first radio network node (12) at the wireless device (10) and/or a signal strength or quality of a signal from the second radio network node (13) at the wireless device (10) and the second radio network node (13) is configured to perform the handover decision based on the received measurement report.

15. A second radio network node (13) according to any of the claims 13-14, further being configured to
receive an informing request from the first radio network node informing the second radio network node (13) to listen in on a given sounding reference signal from the wireless device (10);
receive the given sounding reference signal from the wireless device (10); and
measure signal strength and/or quality from the wireless device (10) on the received sounding reference signal.

16. A second radio network node (13) according to claim 15, further being configured
to receive from the first radio network node (12), a sounding measurement report indicating the measured signal strength or quality of the given sounding reference signal from the wireless device (10); and further being configured to perform the handover decision based on the received sounding measurement and the measured signal strength and/or quality of the received sounding reference signal.

## Patentansprüche

1. Verfahren, das von einem ersten Funknetzknoten (12) durchgeführt wird, um einen Mobilitätsvorgang einer drahtlosen Vorrichtung (10) zwischen dem ersten Funknetzknoten (12) und einem zweiten Funknetzknoten (13) in einem drahtlosen Kommunikationsnetz (1) zu ermöglichen;
umfassend:
- *Bestimmen* (701), eine Übergabeentscheidung für die drahtlose Vorrichtung (10) an den zweiten Funknetzknoten (13) abzugeben, und
- *Übertragen* (702) einer Anzeige an den zweiten Funknetzknoten (13), welche Anzeige eine Abgabe der Übergabeentscheidung für die drahtlose Vorrichtung (10) anzeigt.

2. Verfahren nach Anspruch 1, weiter umfassend
- *Weiterleiten* (703) eines Messberichts von der drahtlosen Vorrichtung (10) an den zweiten Funknetzknoten (13), der eine Signalstärke oder Qualität eines Signals vom ersten Funknetzknoten (12) an der drahtlosen Vorrichtung (10) und/oder eine Signalstärke oder Qualität eines Signals vom zweiten Funknetzknoten (13) an der drahtlosen Vorrichtung (10) anzeigt.

3. Verfahren nach einem der Ansprüche 1-2, weiter umfassend
- *Informieren* (704) des zweiten Funknetzknotens (13) darüber, ein gegebenes Sounding-Referenzsignal von der drahtlosen Vorrichtung (10) abzuhören.

4. Verfahren nach Anspruch 3, wobei das *Informieren* (704) weiter das Auffordern des zweiten Funknetzknotens (13) dazu umfasst, eine Messung des gegebenen Sounding-Referenzsignals von der drahtlosen Vorrichtung (10) zurückzumelden.

5. Verfahren nach einem der Ansprüche 3-4, weiter umfassend
- *Messen* (705) einer Signalstärke oder Qualität des gegebenen Sounding-Referenzsignals von der drahtlosen Vorrichtung (10);
- *Übertragen* (706) eines Sounding-Messberichts an den zweiten Funknetzknoten (13), der die gemessene Signalstärke oder Qualität des gegebenen Sounding-Referenzsignals von der drahtlosen Vorrichtung (10) anzeigt.

6. Verfahren, das von einem zweiten Funknetzknoten (13) durchgeführt wird, um einen Mobilitätsvorgang einer drahtlosen Vorrichtung (10) zwischen einem ersten Funknetzknoten (12) und dem zweiten Funknetzknoten (13) in einem drahtlosen Kommunikationsnetz (1) durchzuführen; umfassend
- *Empfangen* (801) einer Anzeige vom ersten Funknetzknoten (12), welche Anzeige eine Abgabe einer Übergabeentscheidung für die drahtlose Vorrichtung (10) anzeigt, und
- *Durchführen* (807) der Übergabeentscheidung der drahtlosen Vorrichtung (10).

7. Verfahren nach Anspruch 6, weiter umfassend
- *Empfangen* (802) eines Messberichts von der drahtlosen Vorrichtung (10) vom ersten Funknetzknoten (12), der eine Signalstärke oder Qualität eines Signals vom ersten Funknetzknoten (12) an der drahtlosen Vorrichtung (10) und/oder eine Signalstärke oder Qualität eines Signals vom zweiten Funknetzknoten (13) an der drahtlosen Vorrichtung (10) anzeigt, und das *Durchführen* (807) der Übergabeentscheidung auf dem empfangenen Messbericht basiert.

8. Verfahren nach einem der Ansprüche 6-7, weiter umfassend
- *Empfangen* (803) einer Informations-Aufforderung vom ersten Funknetzknoten, die den zweiten Funknetzknoten (13) darüber informiert, ein gegebenes Sounding-Referenzsignal von der drahtlosen Vorrichtung (10) abzuhören;
- *Empfangen* (804) des gegebenen Sounding-Referenzsignals von der drahtlosen Vorrichtung (10); und
- *Messen* (805) von Signalstärke und/oder Qualität von der drahtlosen Vorrichtung (10) am empfangenen Sounding-Referenzsignal.

9. Verfahren nach Anspruch 8, weiter umfassend
- *Empfangen* (806) eines Sounding-Messberichts vom ersten Funknetzknoten (12), der die gemessene Signalstärke oder Qualität des gegebenen Sounding-Referenzsignals von der drahtlosen Vorrichtung (10) anzeigt; und das Durchführen (807) der Übergabeentscheidung auf der empfangenen Sounding-Messung und der gemessenen Signalstärke und/oder Qualität des empfangenen Sounding-Referenzsignals basiert.

10. Verfahren nach einem der Ansprüche 6-9, wobei das *Durchführen* (807) auf einer Last im ersten Funknetzknoten und/oder einer Last im zweitem Funknetzknoten basiert.

11. Erster Funknetzknoten (12), um einen Mobilitätsvorgang einer drahtlosen Vorrichtung (10) zwischen dem ersten Funknetzknoten (12) und einem zweiten Funknetzknoten (13) in einem drahtlosen Kommunikationsnetz (1) zu ermöglichen; wobei der erste Funknetzknoten (12) dazu konfiguriert ist:
zu bestimmen, eine Übergabeentscheidung für die drahtlose Vorrichtung (10) an den zweiten Funknetzknoten (13) abzugeben, und
eine Anzeige an den zweiten Funknetzknoten (13) zu übertragen, welche Anzeige eine Abgabe der Übergabeentscheidung für die drahtlose Vorrichtung (10) anzeigt.

12. Erster Funknetzknoten (12) nach Anspruch 11, der weiter dazu konfiguriert ist, einen Messbericht von der drahtlosen Vorrichtung (10) an den zweiten Funknetzknoten (13) weiterzuleiten, der eine Signalstärke oder Qualität eines Signals vom ersten Funknetzknoten (12) an der drahtlosen Vorrichtung (10) und/oder eine Signalstärke oder Qualität eines Signals vom zweiten Funknetzknoten (13) an der drahtlosen Vorrichtung (10) anzeigt.

13. Zweiter Funknetzknoten (13) zum Durchführen eines Mobilitätsvorgangs einer drahtlosen Vorrichtung (10) zwischen einem ersten Funknetzknoten (12) und dem zweiten Funknetzknoten (13) in einem drahtlosen Kommunikationsnetz (1); wobei der zweite Funknetzknoten (13) dazu konfiguriert ist
vom ersten Funknetzknoten (12) eine Anzeige zu empfangen, welche Anzeige eine Abgabe einer Übergabeentscheidung für die drahtlose Vorrichtung (10) anzeigt, und
die Übergabeentscheidung der drahtlosen Vorrichtung (10) durchzuführen.

14. Zweiter Funknetzknoten (13) nach Anspruch 13, der weiter dazu konfiguriert ist vom ersten Funknetzknoten (12) einen Messbericht von der drahtlosen Vorrichtung (10) zu empfangen, der eine Signalstärke oder Qualität eines Signals vom ersten Funknetzknoten (12) an der drahtlosen Vorrichtung (10) und/oder eine Signalstärke oder Qualität eines Signals vom zweiten Funknetzknoten (13) an der drahtlosen Vorrichtung (10) anzeigt, und der zweite Funknetzknoten (13) dazu konfiguriert ist, die Übergabeentscheidung auf Basis des empfangenen Messberichts durchzuführen.

15. Zweiter Funknetzknoten (13) nach einem der Ansprüche 13-14, der weiter dazu konfiguriert ist
eine Informations-Aufforderung vom ersten Funknetzknoten zu empfangen, die den zweiten Funknetzknoten (13) darüber informiert, ein gegebenes Sounding-Referenzsignal von der drahtlosen Vorrichtung (10) abzuhören;
das gegebene Sounding-Referenzsignal von der drahtlosen Vorrichtung (10) zu empfangen; und
Signalstärke und/oder Qualität von der drahtlosen Vorrichtung (10) am empfangenen Sounding-Referenzsignal zu messen.

16. Zweiter Funknetzknoten (13) nach Anspruch 15, der weiter dazu konfiguriert ist,
vom ersten Funknetzknoten (12) einen Sounding-Messbericht zu empfangen, der die gemessene Signalstärke oder Qualität des gegebenen Sounding-Referenzsignals von der drahtlosen Vorrichtung (10) anzeigt; und weiter dazu konfiguriert ist, die Übergabeentscheidung auf Basis der empfangenen Sounding-Messung und der gemessenen Signalstärke und/oder Qualität des empfangenen Sounding-Referenzsignals durchzuführen.

## Revendications

1. Procédé effectué par un premier nœud de réseau radio (12) pour permettre une procédure de mobilité d'un dispositif sans fil (10) entre le premier nœud de réseau radio (12) et un second nœud de réseau radio (13) dans un réseau de communication sans fil (1) ; comprenant :
- *la détermination* (701) de déléguer une décision de transfert pour le dispositif sans fil (10) au second nœud de réseau radio (13), et
- *la transmission* (702) d'une indication au second nœud de réseau radio (13), laquelle indication indique une délégation de la décision de transfert pour le dispositif sans fil (10).

2. Procédé selon la revendication 1, comprenant en outre
- *l'envoi* (703) au second nœud de réseau radio (13) d'un rapport de mesure provenant du dispositif sans fil (10), indiquant une intensité ou une qualité de signal d'un signal provenant du premier nœud de réseau radio (12) au niveau du dispositif sans fil (10) et/ou une intensité ou une qualité de signal d'un signal provenant du second nœud de réseau radio (13) au niveau du dispositif sans fil (10).

3. Procédé selon l'une quelconque des revendications 1 à 2, comprenant en outre
- *l'avis* (704) au second nœud de réseau radio (13) d'écouter un signal de référence de sondage donné provenant du dispositif sans fil (10).

4. Procédé selon la revendication 3, dans lequel *l'avis* (704) comprend en outre la demande au second nœud de réseau radio (13) de rapporter en retour une mesure du signal de référence de sondage donné provenant du dispositif sans fil (10).

5. Procédé selon l'une quelconque des revendications 3 à 4, comprenant en outre
- *la mesure* (705) d'une intensité ou d'une qualité de signal du signal de référence de sondage donné provenant du dispositif sans fil (10) ;
- *la transmission* (706) au second nœud de réseau radio (13) d'un rapport de mesure de sondage indiquant l'intensité ou la qualité de signal mesurée du signal de référence de sondage donné provenant du dispositif sans fil (10).

6. Procédé effectué par un second nœud de réseau radio (13) pour effectuer une procédure de mobilité d'un dispositif sans fil (10) entre un premier nœud de réseau radio (12) et le second nœud de réseau radio (13) dans un réseau de communication sans fil (1) ; comprenant
- *la réception* (801) à partir du premier nœud de réseau radio (12) d'une indication, laquelle indication indique une délégation d'une décision de transfert pour le dispositif sans fil (10), et
- *l'exécution* (807) de la décision de transfert du dispositif sans fil (10).

7. Procédé selon la revendication 6, comprenant en outre
- *la réception* (802) à partir du premier nœud de réseau radio (12) d'un rapport de mesure provenant du dispositif sans fil (10), indiquant une intensité ou une qualité de signal d'un signal provenant du premier nœud de réseau radio (12) au niveau du dispositif sans fil (10) et/ou une intensité ou une qualité de signal d'un signal provenant du second nœud de réseau radio (13) au niveau du dispositif sans fil (10) et *l'exécution* (807) de la décision de transfert est basée sur le rapport de mesure reçu.

8. Procédé selon l'une quelconque des revendications 6 à 7, comprenant en outre
- *la réception* (803) d'une demande d'avis à partir du premier nœud de réseau radio, avisant le second nœud de réseau radio (13) d'écouter un signal de référence de sondage donné provenant du dispositif sans fil (10) ;
- *la réception* (804) du signal de référence de sondage donné provenant du dispositif sans fil (10) ; et
- *la mesure* (805) d'une intensité et/ou d'une qualité de signal à partir du dispositif sans fil (10) sur le signal de référence de sondage reçu.

9. Procédé selon la revendication 8, comprenant en outre
- *la réception* (806) à partir du premier nœud de réseau radio (12) d'un rapport de mesure de sondage indiquant l'intensité ou la qualité de signal mesurée du signal de référence de sondage donné provenant du dispositif sans fil (10) ; et l'exécution (807) de la décision de transfert est basée sur la mesure de sondage reçue et l'intensité et/ou la qualité de signal mesurée du signal de référence de sondage reçu.

10. Procédé selon l'une quelconque des revendications 6 à 9, dans lequel *l'exécution* (807) est basée sur une charge dans le premier nœud de réseau radio et/ou une charge dans le second nœud de réseau radio.

11. Premier nœud de réseau radio (12) pour permettre une procédure de mobilité d'un dispositif sans fil (10) entre le premier nœud de réseau radio (12) et un second nœud de réseau radio (13) dans un réseau de communication sans fil (1) ; le premier nœud de réseau radio (12) étant configuré pour :
déterminer de déléguer une décision de transfert pour le dispositif sans fil (10) au second nœud de réseau radio (13), et
transmettre une indication au second nœud de réseau radio (13), laquelle indication indique une délégation de la décision de transfert pour le dispositif sans fil (10).

12. Premier nœud de réseau radio (12) selon la revendication 11, étant configuré en outre pour
envoyer au second nœud de réseau radio (13) un rapport de mesure provenant du dispositif sans fil (10), indiquant une intensité ou une qualité de signal d'un signal provenant du premier nœud de réseau radio (12) au niveau du dispositif sans fil (10) et/ou une intensité ou une qualité de signal d'un signal provenant du second nœud de réseau radio (13) au niveau du dispositif sans fil (10).

13. Second nœud de réseau radio (13) pour effectuer une procédure de mobilité d'un dispositif sans fil (10) entre un premier nœud de réseau radio (12) et le second nœud de réseau radio (13) dans un réseau de communication sans fil (1) ; le second nœud de réseau radio (13) étant configuré pour
recevoir à partir du premier nœud de réseau radio (12) une indication, laquelle indication indique une délégation d'une décision de transfert pour le dispositif sans fil (10), et
effectuer la décision de transfert du dispositif sans fil (10).

14. Second nœud de réseau radio (13) selon la revendication 13, étant configuré en outre pour
recevoir à partir du premier nœud de réseau radio (12) un rapport de mesure provenant du dispositif sans fil (10), indiquant une intensité ou une qualité de signal d'un signal provenant du premier nœud de réseau radio (12) au niveau du dispositif sans fil (10) et/ou une intensité ou une qualité de signal d'un signal provenant du second nœud de réseau radio (13) au niveau du dispositif sans fil (10) et le second nœud de réseau radio (13) est configuré pour effectuer la décision de transfert sur la base du rapport de mesure reçu.

15. Second nœud de réseau radio (13) selon l'une quelconque des revendications 13 à 14, étant configuré en outre pour
recevoir une demande d'avis à partir du premier nœud de réseau radio, avisant le second nœud de réseau radio (13) d'écouter un signal de référence de sondage donné provenant du dispositif sans fil (10) ;
recevoir le signal de référence de sondage donné provenant du dispositif sans fil (10) ; et
mesurer une intensité et/ou une qualité de signal à partir du dispositif sans fil (10) sur le signal de référence de sondage reçu.

16. Second nœud de réseau radio (13) selon la revendication 15, étant configuré en outre pour
recevoir à partir du premier nœud de réseau radio (12) un rapport de mesure de sondage indiquant l'intensité ou la qualité de signal mesurée du signal de référence de sondage donné provenant du dispositif sans fil (10) ; et étant configuré en outre pour effectuer la décision de transfert sur la base de la mesure de sondage reçue et de l'intensité et/ou la qualité de signal mesurée du signal de référence de sondage reçu.
